# Europäisches Patentamt

# European Patent Office

# Office européen des brevets

(19)

(11) Veröffentlichungsnummer: **0 217 004**
**B1**

(12) **EUROPÄISCHE PATENTSCHRIFT**

(45) Veröffentlichungstag der Patentschrift:
**31.01.90**

(51) Int. Cl.⁴: **C08G 61/08**

(21) Anmeldenummer: **86108828.4**

(22) Anmeldetag: **28.06.86**

(54) **Verfahren zur Einstellung der cis-trans-Doppelbindungskonfiguration bei Polyalkenameren.**

(30) Priorität: **22.08.85 DE 3529996**

(43) Veröffentlichungstag der Anmeldung:
**08.04.87 Patentblatt 87/15**

(45) Bekanntmachung des Hinweises auf die Patenterteilung:
**31.01.90 Patentblatt 90/5**

(84) Benannte Vertragsstaaten:
**BE DE FR GB IT NL**

(56) Entgegenhaltungen:
**EP-A- 0 002 279**
**BE-A- 679 624**
**DE-A- 2 205 805**
**FR-A- 2 124 619**
**FR-A- 2 179 838**

(73) Patentinhaber: **HÜLS AKTIENGESELLSCHAFT,**
**Patentabteilung / PB 15 - Postfach 13 20,**
**D-4370 Marl 1(DE)**

(72) Erfinder: **Zerpner, Dieter, Dr., Neulandstrasse 110,**
**D-4370 Marl(DE)**
Erfinder: **Streck, Roland, Dr., Leverkusener Strasse 12,**
**D-4370 Marl(DE)**

ACTORUM AG

**Beschreibung**

Verfahren zur Einstellung der cis-trans-Doppelbindungskonfiguration bei Polyalkenameren

Es ist bekannt, daß cyclische Olefine, die mindestens eine nicht substitutierte Ringdoppelbindung aufweisen, mit Hilfe sogenannter Metathesekatalysatoren unter Öffnung des Ringes polymerisiert werden können (DE-OSS 15 70 940, 16 45 038, 17 20 798, 17 70 143 und 18 05 158, DE-AS 12 99 868, GP-PSS 11 24 456, 11 94 013 und 11 82 975).

Weiterhin ist es bekannt, daß offenkettige Monoolefine in Gegenwart der Metathesekatalysatoren bei der Polymerisation von Cycloolefinen als Molekulargewichtsregler (DE-OS 29 22 335 und DE-PSS 19 19 047, 19 45 358, 20 27 905, 20 28 716, 20 28 935, 21 05 161 und 21 57 405) bzw. auf Polymere, in deren Hauptkette sich nicht substitutierte Doppelbindungen befinden, abbauend wirken (DE-OS 19 29 140 und US-PS 3 558 589).

In der Regel besitzen die Doppelbindungen in den durch ringöffnende Polymerisation - ggf. durch Zusatz eines Molekulargewichtsreglers - erhaltenen Produkten (Polyalkenameren) überwiegend trans-Konfiguration. Dadurch überwiegt der thermoplastische und nicht der oftmals gewünschte kautschukartige Charakter.

Aufgabe der Erfindung war es nun, im hochmolekularen Bereich Polyalkenamere mit verringerter Kristallisationsneigung und damit besseren Tieftemperatureigenschaften, und im niedermolekularen Bereich leicht fließende Öle jeweils mit guten Ausbeuten herzustellen. Solche Produkte zeichnen sich bekanntermaßen durch einen verminderten trans- und damit höheren cis-Gehalt der im Polymeren vorhandenen Doppelbindungen aus.

Diese Aufgabe wurde überraschend durch die in den Patentansprüchen beschriebenen Maßnahmen gelöst.

Überraschend deswegen, weil durch den Zusatz cyclischen 1,3-Dienen bei der ringöffnenden Polymerisation von cis,cis-Cyclooctadien-(1,5) die Reaktion stark behindert wird, was sich durch einen starken Rückgang der Ausbeute bemerkbar macht.

Im Falle von cyclischen 1,3-Dienen können solche Verbindungen eingesetzt werden, die 5 bis 12 C-Atome im Ring aufweisen, wie z.B. Cyclohexadien-(1,3), Cyclooctadien-(1,3) und Cyclododecadien-(1,3). Ferner sind auch cyclische Verbindungen mit mehr als zwei Doppelbindungen im Ring, wie Cycloheptatrien-(1,3,5) oder Cyclooctatetraen-(1,3,5,7), geeignet.

Die erfindungsgemäß einzusetzenden Mengen an Verbindungen mit Doppelbindungen in 1,3-Stellung betragen 0,1 bis 150 Mol-%, vorzugsweise 3 bis 100 Mol-% bezogen auf cis,cis-Cyclooctadien-(1,5). Diese Maßgabe gilt auch dann, wenn cis,cis-Cyclooctadien-(1,5) teilweise durch andere cyclische Monoolefine ersetzt sind.

Das cyclische Olefin, das im Rahmen des erfindungsgemäßen Verfahrens polymerisiert wird, ist cis,cis-Cyclooctadien-(1,5), das technisch verfügbar ist. Das cyclische Olefin kann allein oder mit cyclischen Monoolefinen mit 7 bis 12 Kohlenstoffatomen polymerisiert werden. Die cyclischen Monoolefine können dabei bis zu 80 Mol-%, vorzugsweise bis zu 60 Mol-% zugesetzt werden.

Geeignete cyclische Monoolefine sind z. B. Cyclohepten, Cycloocten und Cyclododecen. Bevorzugt wird Cycloocten als Comonomeres verwendet.

Das erfindungsgemäße Verfahren kann mit allen für die ringöffnende Polymerisation geeigneten Katalysatoren durchgeführt werden. Diese enthalten bekanntlich Verbindungen von Metallen der 5. bis 7. Nebengruppe des Periodischen Systems der Elemente (PSE), vornehmlich des Niobs, Tantals, Molybdäns, Wolframs und Rheniums sowie Metalle der 1. bis 4. Hauptgruppe des PSE bzw. deren Alkyle oder Hydride, gegebenenfalls mit weiteren Liganden, wie z. B. Halogen, Alkoxyl oder Carboxylat, oder an ihrer Stelle Lewis-Säuren. Außerdem können sie weitere aktivierende Zusätze wie z. B., Alkohole, Epoxide, Hydroperoxide, Vinyl- und Allylether und -ester, Vinylhalogenide und aromatische Nitroverbindungen enthalten.

Bei der Herstellung niedermolekularer Produkte gleichen Molekulargewichts führt eine steigende Zugabe an cyclischen 1,3-Diolefinen zu einem fortschreitenden Rückgang von Doppelbindungen mit trans-Konfiguration d. h. die Viskosität der Produkte nimmt fortlaufend ab.

Im Falle von hochmolekularen Produkten ergibt eine steigende Zugabe an cyclischen 1,3-Diolefinen ebenfalls eine Abnahme des trans-Doppelbindungs-Gehaltes, d. h. die Kristallinität und damit einhergehend die Schmelztemperatur nehmen ab.

Die Umsetzung kann in allen Lösemitteln durchgeführt werden, welche als geeignet bei der Polymerisation mit Hilfe von Ziegler-Natta-Katalysatoren bekannt sind. Die wichtigsten Vertreter aus der Gruppe der aliphatischen, alicyclischen, aromatischen und halogenierten Kohlenwasserstoffe sind folgende: Pentan, Hexan, Heptan, n- und iso-Octan, Isononan (hydriertes Trimerpropen), n-Decan, Isododecan (hydriertes Tetramerpropen), Cyclopentan, Cyclohexan, Methylcyclopentan, Methylcyclohexan, Ethylcyclohexan, Isopropylcyclohexan, Cyclooctan, Decahydronaphthalin, hydrierte Terpene wie Pinan und Camphan, Cyclohexen und seine Substitutionsprodukte, Benzol, Toluol, o-, m-, p-Xylol, Ethylbenzol, o-, m-, p-Diethylbenzol, n-Propylbenzol, Isopropylbenzol und andere Mono- bis Polyalkylbenole, Tetrahydro-naphthalin, Methylenchlorid, Chloroform, Tetrachlorkohlenstoff, 1,2-Dichlorethylen, Trichlorethylen, Tetrachlorethylen, Chlorbenzol, o-Dichlorbenzol, Trichlorbenzol (Isomerengemisch), Brombenzol, Fluorbenzol, 1,2-Dichlorethan.

Wesentlich ist, daß die Lösungsmittel durch geeignete Reinigung möglichst frei von Wasser und anderen H-aciden Verbindungen sowie Verbindungen mit Donatorfunktionen (Lewis-Basen) eingesetzt werden. Außer sehr kleinen Mengen, die gegebenenfalls zur Erzielung bestimmter Effekte zugesetzt werden, beeinträchtigen solche Verunreinigungen im allgemeinen die Aktivität des Katalysators.

Das erfindungsgemäße Verfahren wird bei Temperaturen zwischen -50 und +80 °C durchgeführt. Die Reaktionstemperatur wird hierbei nach oben durch die thermische Stabilität des Katalysators und nach unten durch die zu weit herabgesetzte Reaktionsgeschwindigkeit begrenzt. Vorteilhaft arbeitet man bei Temperaturen zwischen -30 und +60 °C, vorzugsweise aber im Bereich zwischen 0 und +50 °C, der besonders leicht realisierbar ist.

Die Molekulargewichte der nach dem erfindungsgemäßen Verfahren herstellbaren Polyalkenameren können durch den Zusatz offenkettiger - wahlweise auch funktionell substituierter - Olefine nach den eingangs zitierten Verfahren in weiteren Grenzen eingestellt werden. Es wird dadurch möglich, sowohl kautschukartige Produkte hoher Mooneyviskosität, die sich mit viel Öl verstrecken lassen, herzustellen, als auch leicht verarbeitbare Kautschuk-Typen. Es ist sogar möglich, sehr niedrigviskose, stark klebrige Produkte oder auch sirupöse bis ölige Flüssigkeiten zu erzeugen.

Die zur Erreichung einer bestimmten Konsistenz notwendige Menge Regler hängt naturgemäß von der Art des jeweiligen Monomeren, von der Art des Reglers, vom verwendeten Katalysator und den übrigen Polymerisationsbedingungen ab; die erforderliche Menge, die bis zu 50 Molprozent, bezogen auf eingesetzte(s) Monomere(s), betragen kann, läßt sich durch wenige Vorversuche leicht ermitteln.

Im allgemeinen geht man bei der Herstellung der erfindungsgemäßen Polyalkenameren so vor, daß man die Ausgangsmonomeren(gemische) einschließlich des cyclischen 1,3-Diolefins mit dem Regler im Lösemittel vorlegt, die einzelnen Katalysatorkomponenten zugibt und die Polymerisation unter Rühren und gegebenenfalls Abführung von Reaktionswärme durchführt. Selbstverständlich kann die Polymerisation auch in Teilschritten durchgeführt werden, d. h., Monomere, Regler und Katalysatorkomponenten können mehrfach nachdosiert werden.

Das erfindungsgemäße Verfahren kann auch zur Herstellung von Blockcopolymeren eingesetzt werden. Für diesen Fall wird in bekannter Weise in einer ersten Stufe z. B. Cyclooctien, Cyclooctadien-(1,5), Cyclododecen, o. ä. metathetisch polymerisiert. Nach Beendigung dieser Reaktion zu einem jeweils gewünschten Zeitpunkt wird wie oben beschrieben erfindungsgemäß weiterverfahren.

Wenn der erwünschte oder erreichbare Umsatz sich eingestellt hat, desaktiviert man den Katalysator durch Zugabe eines Alkohols, wie z. B. Methanol, oder einer anderen H-aciden Verbindung. Dann wäscht man die polymerhaltige Phase mit einer wäßrigen, wäßrig-alkoholischen oder alkoholischen Lösung von Mitteln, welche lösend auf die zunächst als Alkoholate oder Verbindungen der H-aciden Substanzen vorliegenden Katalysatorreste wirken. Solche lösend wirkenden Substanzen sind z. B. Säuren, Laugen oder Komplexbildner, wie Citronen- oder Weinsäure, methanolische Kalilauge, Acetylaceton, Ethylendiamintetraessigsäure und Nitrilotriessigsäure. Hierauf trennt man die Polymeren durch Ausfällen z. B. Eingießen in ein Fällungsmittel wie z. B. Methanol oder Isopropanol, oder Abdestillieren des Lösemittels, z. B. durch Einblasen von Wasserdampf oder Eindüsen der Polymerlösung in heißes Wasser, ab.

Zum Schutz gegen Oxidation, Vergelung und andere Alterungserscheinungen kann man den erfindungsgemäßen Polyalkenameren in verschiedenen Stufen der Aufarbeitung Stabilisatoren, z. B. aus der Klasse der aromatischen Amine oder der sterisch gehinderten Phenole beimengen. Ebenso kann man eventuell eine weitere Reinigung der Polymeren durch Umfällen durchführen. Nach diesen Operationen werden die Polymeren in bekannter Weise, z. B. im Vakuumtrockenschrank oder am Rotationsverdampfer, getrocknet.

Mit Hilfe des erfindungsgemäßen Verfahrens wird es möglich, kälteschlagzähe Polyalkenamere in unerwartet hoher Ausbeute herzustellen. Im Vergleich zu Verfahren des Standes der Technik kann die Ausbeute mehr als verdoppelt werden. Dies war um so weniger zu erwarten, als daß die erfindungsgemäß einzusetzenden cyclischen 1,3-Diene für metathetische Polymerisationen als Katalysatorgifte bekannt sind.

Die vorliegende Erfindung wird durch die Beispiele näher erläutert. Darin werden die nachfolgenden Begriffe durch die nebenstehenden Abkürzungen beschrieben:

cis,cis-Cyclooctadien = COD

Ethyl = Et

Isobutyl = iBu

Allyltribromphenylether = ATBPE

Doppelbindung(en) = DB

Jodzahl [g Jod/100 g Substanz] = JZ

Zahlenmittleres Molekulargewicht ( dampfdruckosmometrisch bestimmt) = $\overline{M}_n$

Infrarot = IR

Ultraviolett = UV

Kernmagnetische Resonanz = NMR

Cyclopentadien = CPD
Cyclohexadien = CHxD
Cycloheptatrien = CHT
Cyclododecadien = CDD
Relative Lösungsviskosität = I
Stabilisator BKF = 2,2'-Methylen-bis-(6-tert.-butyl-4-methylphenol)

Beispiel 1

In einem 2 l-Glasreaktor mit Planschliffdeckel, versehen mit Rührer, Thermofühler, Tropftrichter sowie Schutzgaszu- und -ableitung, wurden unter trockenem Argon 500 ml Hexan, 108 g COD-1,5, 10,8 g COD-1,3 und 11,2 g Octen-1 (10- Mol-% bezogen auf COD-1,5) mit 1 mMol WCl$_6$ (in Form einer 0,1 molaren Lösung in Chlorbenzol), 1 mMol EtOH (in Form einer 0,1 molaren Lösung in Chlorbenzol) und 6 mMol EtAl-Cl$_2$ (in Form einer 1 molaren Lösung in Chlorbenzol) versetzt und die Mischung 15 Minuten unter Rühren polymerisiert, wobei die Temperatur von 22 °C auf 45 °C anstieg. Danach wurde die Polymerisation durch Zusatz einer Lösung von 3 g Kaliumhydroxid und 1 g Stabilisator BKF in 50 ml Methanol gestoppt. Das Polymere wurde in 1,5 l Methanol ausgefällt und viermal mit 1 l Methanol unter Rühren gewaschen. Nach Entfernen der flüchtigen Anteile im Vakuum am Rotationsverdampfer bei 70 °C wurden 112 g eines Öls mit folgenden Kenngrößen erhalten:
DB-Konfiguration DB [% trans/vinyl/cis] durch IR-Analyse bestimmt: 46/3/51
Konjugierte DB [als % Octadien/-trien] durch UV-Analyse bestimmt: 3,4/0,04
$\overline{M}_n$: 1 500

Beispiele 2 bis 5, Vergleichsbeispiele A und B

Bei den Beispielen 2 bis 5 sowie den Vergleichsbeispielen A und B, deren Ergebnisse in der Tabelle 1 dargestellt sind, wurde in gleicher Weise wie beim Beispiel 1 gearbeitet mit dem Unterschied, daß in den Beispielen 2 bis 5 COD-1,3 durch andere erfindungsgemäße Diene mit 1,3-ständigen DB ausgetauscht, im Vergleichsbeispiel A kein 1,3-Dien und im Vergleichsbeispiel B ein 1,4-Dien statt eines 1,3-Diens zugesetzt wurde.

Tabelle 1
Polymerisation von COD-1,5 (108 g = 1 Mol) in Hexan (500 ml) bei Reglung mit 10 Mol-%
Octen-1 und einem COD-1,5/W-Verhältnis von 1 000/1 unter Zusatz von verschiedenen
1,3-Dienen

| Beispiel Nr. | Dien Art | Menge [Mol-%] | Ausbeute [g] | DB-Konfiguration trans/vinyl/cis | $M_n$ | Konjugierte DB [% Dien/Trien] |
|---|---|---|---|---|---|---|
| 2 | CDD-1,3 | 10 | 118 | 64/3/33 | 1610 | 2,47 / 0,04 |
| 3 | CHxD-1,3 | 10 | 119 | 60/4/37 | 1410 | 0,21 / 0,01 |
| 4 | CPD-1,3 | 10 | 90 | 41/1/58 | gelhaltig | 0,27 / 0,01 |
| 5 | CHT-1,3,5 | 10 | 106 | 63/4/33 | 1250 | 0,06 / 0,01 |
| A | — | — | 106 | 84/2/14 | 1300 | 0,17 / 0,01 |
| B | CHxD-1,4 | 10 | 108 | 82/1/17 | 1540 | 0,23 / 0,01 |

Beispiele 6 bis 12

Im Beispiel 6 wurde analog Beispiel 1 gearbeitet, aber nur 54 g COD-1,5, 5,4 g COD-1,3 und 0,28 g Octen-1 (0,5 Mol-% bezogen auf COD-1,5) eingesetzt. Der Metathesekatalysator wurde durch Zugabe von 1 mMol WCl$_6$, 1 mMol EtOH, 1 mMol ATBPE und 7 mMol EtAlCl$_2$ hergestellt. Im Beispiel 7 ist COD-1,3 durch 1,7 g (5 Mol-% bezogen auf COD-1,5) Isopren ersetzt und im Beispiel 8 durch 3,4 g (10 Mol-% entsprechend der Menge COD-1,3 im Beispiel 6). Beispiel 9 unterscheidet sich vom Beispiel 8 durch Zusatz der 3-fachen Katalysatormenge.
In den Beispielen 10 und 11 ist gegenüber Beispiel 6 die Reglermenge auf 10 Mol-% Octen-1 und der COD-1,3-Zusatz auf 50 Mol-% (jeweils bezogen auf COD-1,5) gesteigert. Im Beispiel 12 ist der COD-1,3-Anteil nochmals auf jetzt 100 Mol-% erhöht bei einer Reglermenge von 20 Mol-% Octen-1 (jeweils bezogen auf COD-1,5). Außerdem wurde für die Beispiele 11 und 12 gegenüber Beispiel 6 die doppelte Katalysatormenge eingesetzt.
Die Ergebnisse sind in Tabelle 2 zusammengestellt.

Tabelle 2
Polymerisation von COD-1,5 (54 g = 0,5 Mol) in Hexan (500 ml) bei unterschiedlichen Reglermengen und COD-1,5/W-Verhältnissen unter Zusatz verschiedener 1,3-Diene

| Beispiel Nr. | Dien Art | Menge [Mol-%] | Regler Octen-1 [Mol-%] | Monomer-Katalysator Verhältnis [Mol COD-1,5]/[Mol W] | Ausbeute [g] | DB-Konfiguration trans/vinyl/cis | [ml/g] / | Gel [%] | Konjugierte DB [% Dien/Trien] |
|---|---|---|---|---|---|---|---|---|---|
| 6 | COD-1,3 | 10 | 0,5 | 500 | 45 | 58/1/41 | 46 / | 2 | 3,9/0,09 |
| 7 | Isopren | 5 | 0,5 | 500 | 44 | 58/1/41 | 26 / | 3 | 0,36/0,01 |
| 8 | Isopren | 10 | 0,5 | 500 | 11 | 21/1/78 | 12 / | 8 | 0,33/0,01 |
| 9 | Isopren | 10 | 0,5 | 167 | 44 | 73/2/25 | 15 / | 3 | 0,18/0,01 |
| 10 | COD-1,3 | 50 | 10 | 500 | 6 | 23/2/75 | – / | – | 10,8/0,19 |
| 11 | COD-1,3 | 50 | 10 | 250 | 51 | 37/3/60 | <10 / | <2 | 12,0/0,55 |
| 12 | COD-1,3 | 100 | 20 | 250 | 50 | 34/6/62 | <10 / | <2 | 20,2/1,3 |

Beispiel 13

In einem 2 l-Glasreaktor, ausgestattet wie im Beispiel 1 beschrieben, wurden 300 ml Chlorbenzol, 55 g Cycloocten, 54 g COD-1,5, 8,1 g COD-1,3 (15 Mol-% bezogen auf COD-1,5) und 0,45 g Octen-1 (0,4 Mol-% bezogen auf die Summe Cycloocten und COD-1,5) mit 0,5 mMol $WCl_6$, 0,5 mMol EtOH, 0,5 mMol ATBPE (jeweils 0,1 molare Lösungen in Chlorbenzol) und 3,5 mMol $iBuAlCl_2$ (1 molare Lösung in Chlorbenzol) versetzt und die Mischung unter Rühren polymerisiert. Die Temperatur stieg schnell von 22 °C auf 54 °C unter starker Viskositätszunahme an und die Reaktionsmischung wurde mit 200 ml Chlorbenzol verdünnt. Nach 15 Minuten wurde die Polymerisation, wie im Beispiel 1 beschrieben, gestoppt und das Produkt aufgearbeitet. Es resultierten 104 g Polymere mit folgenden Kenngrößen:
DB-Konfiguration [% trans/vinyl/cis] durch IR-Analyse bestimmt: 32/<1/68
I [ml/g]: 115
Gel [%]: 2
JZ: 335

Ein Schmelzpunkt bzw. - bereich konnte bei dem kautschukartigen Produkt mittels Differential-Thermoanalyse (DTA) nicht nachgewiesen werden.

Beispiel 14

entspricht Beispiel 13 mit dem Unterschied, daß 77 g Cycloocten, 32,4 g COD-1,5 und 5,4 g COD-1,3 (17 Mol-% bezogen auf COD-1,5) neben 0,45 g Octen-1 eingesetzt wurden. Es resultierten 99 g Polymere mit folgenden Kenngrößen:
DB-Konfiguration [% trans/vinyl/cis] durch IR-Analyse bestimmt: 47/<1/53
I[ml/g]: 153
Gel [%]: 3
JZ: 295

Beispiel 15

In einem 2 l Glasreaktor, ausgestattet wie im Beispiel 1 beschrieben, wurden in einer ersten Stufe 600 ml Hexan, 66 g (0,6 Mol) Cycloocten und 0,54 g Octen-1 (0,8 Mol-% bezogen auf Cycloocten) mit 1,2 mMol WCl$_6$, 1,2 mMol EtOH, 1,2 mMol ATBPE (jeweils 0,1 molare Lösungen in Chlorbenzol) und 8,4 mMol iBuAlCl$_2$ (1 molare Lösung in Chlorbenzol) versetzt und 15 Minuten unter Rühren polymerisiert. Dann wurde ein Sechstel der Reaktionslösung dem Reaktor entnommen und diese Probe getrennt, aber entsprechend dem Endprodukt aus der zweiten Stufe, aufgearbeitet.

In der zweiten Stufe wurde der Reaktionsmischung ein Gemisch aus 54 g (0,5 Mol) COD-1,5 und 5,4 g (10 Mol-% bezogen auf COD-1,5) COD-1,3 zugesetzt. Die Viskosität des Polymerisationsansatzes erhöhte sich daraufhin so stark, daß unmittelbar danach und nach 10 Minuten jeweils mit 500 ml Hexan verdünnt wurde. Nach 15 Minuten wurde die Polymerisation durch Zusatz einer Lösung von 5 g KOH und 1 g Stabilisator BKF in 100 ml Methanol gestoppt, das Produkt in 1,5 l Methanol ausgefällt, in 500 ml Toluol gelöst, erneut mit 1,5 l Methanol ausgefällt und zweimal mit je 1 l Methanol unter Rühren gewaschen. Sowohl das Fällungs- als das Waschmethanol enthielt jeweils 1 g Stabilisator BKF. Nach dem Trocknen im Vakuumtrockenschrank bei 70 °C wurden 95 g Polymere erhalten. Die Probe aus der ersten Stufe lieferte 9,9 g Polyoctenamere. Die Kenngrößen beider Produkte sind in Tabelle 3 zusammengestellt.

Vergleichsbeispiel D

wurde entsprechend Beispiel 15 durchgeführt mit dem Unterschied, daß in der zweiten Stufe der Polymerisation nur COD-1,5 und kein COD-1,3 zugegeben wurde. Ausbeuten und Kenngrößen sind in Tabelle 3 enthalten.

Beispiel 16 und Vergleichbeispiel E

entsprechen Beispiel 15 bzw. Vergleichsbeispiel D mit dem Unterschied, daß in der ersten Stufe statt des Cyclooctens 64,8 g COD-1,5 eingesetzt und in der Zweiten Stufe der Reaktionsmischung nur einmal (nach 5 Minuten Laufzeit) 500 ml Hexan zur Viskositätserniedrigung zugesetzt wurden Die Ausbeute und Kenngrößen beider Produkte sind in Tabelle 3 enthalten.

Tabelle 3
Stufenweise Polymerisation von Cycloolefinen

| Bsp. | Stufe | Cycloolefin I Art | Menge [Mol] | Abgetrennte Probe Menge [Mol] | Ausbeute [g] | Cycloolefin II Art | Menge [Mol] | 1,3-Dien Art | Menge bezogen auf II [Mol-%] | Ausbeute [g] | DB-[a] Konfig. tr./vi/cis | Konj.[b] DB Dien/Trien | I/Gel ml/[%] g | JZ |
|------|-------|-------------------|-------------|-------------------------------|--------------|--------------------|-------------|--------------|------------------------------|--------------|---------------------------|------------------------|----------------|----|
| 15 | I | Cycloocten | 0,6 | 0,1 | 9,9 | | | | | | 81/<1/19 | | 44/2 | |
| | II | | | | | COD-1,5 | 0,5 | COD-1,3 | 10 | 95 | 73/<1/27 | 1,6/0,02 | 80/2 | 333 |
| D | I | Cycloocten | 0,6 | 0,1 | 9,3 | | | | | | 83/<1/17 | | 43/<2 | |
| | II | | | | | COD-1,5 | 0,5 | COD-1,3 | -- | 90 | 86/<1/14 | <0,08/-- | 71/2 | 338 |
| 16 | I | COD-1,5 | 0,6 | 0,1 | 8,8 | | | | | | 88/1/11 | | 28/<2 | |
| | II | | | | | COD-1,5 | 0,5 | COD-1,3 | 10 | 87 | 71/<1/29 | 1,5/0,02 | 57/<2 | 447 |
| E | I | COD-1,5 | 0,6 | 0,1 | 9,2 | | | | | | 89/1/10 | | 29/<2 | |
| | II | | | | | COD-1,5 | 0,5 | COD-1,3 | -- | 92 | 84/<1/16 | <0,07/-- | 56/<2 | 446 |

[a] DB-Konfiguration [% trans/vinyl/cis] durch IR-Analyse bestimmt.
[b] Konjugierte DB [als % Octadien/-trien] durch UV-Analyse bestimmt.

EP 0 217 004 B1

**Patentansprüche**

1. Verfahren zur Einstellung der cis-trans-Doppelbindungskonfiguration in Polyalkenameren, hergestellt durch ringöffnende Polymerisation von cis,cis-Cyclooctadien-(1,5), dadurch gekennzeichnet, daß man die Polymerisation in Gegenwart von 0,1 bis 150 Mol-%, bezogen auf cis,cis-Cyclooctadien-(1,5), eines cyclischen Olefins mit einem Doppelbindungspaar in 1,3-Stellung durchführt.

2. Verfahren nach Anspruch 1, dadurch gekennzeichnet, daß man bis zu 80 Mol-% des cis,cis-Cyclooctadiens-(1,5) durch ein cyclisches Monoolefin ersetzt.

3. Verfahren nach den Ansprüchen 1 und 2, dadurch gekennzeichnet, daß man als cyclisches Olefin mit einem Doppelbindungspaar in 1,3-Stellung Cyclopentadien-(1,3), Cyclohexadien-(1,3), Cyclooctadien-(1,3), Cyclooctatetraen-(1,3,5,7), Cycloheptatrien-(1,3,5) oder Cyclododecadien-(1,3) verwendet.

**Claims**

1. A process for adjusting the cis-trans double bond configuration in polyalkenamers, prepared by ring-opening polymerization of cis,cis-1,5-cyclo-octadiene, characterized in that the polymerization is carried out in the presence of 0.1 to 150 mole %, relative to cis,cis-1,5-cyclooctadiene, of a cyclic olefin having a pair of double bonds in the 1,3-position.

2. A process according to claim 1, characterized in that up to 80 mole % of the cis,cis-1,5-cyclo-octadiene is replaced by a cyclic monoolefin.

3. A process according to claims 1 and 2, characterized in that 1,3-cyclopentadiene, 1,3-cyclohexadiene, 1,3-cyclo-octadiene, 1,3,5,7-cyclo-octatetraene, 1,3,5-cycloheptatriene, or 1,3-cyclododecadiene is used as the cyclic olefin having a pair of double bonds in the 1,3-position.

**Revendications**

1. Procédé pour l'établissement de la configuration à double liaison cis-trans dans des polyalcénamères, préparés par polymérisation décyclisante de cis,cis-cyclo-octadiène-(1,5), caractérisé par le fait que l'on effectue la polymérisation en présence de 0,1 à 150% molaires, relativement au cis,cis-cyclo-octadiène-(1,5), d'une oléfine cyclique présentant une paire de liaisons doubles en position 1,3.

2. Procédé selon la revendication 1, caractérisé par le fait que l'on remplace jusqu'à 80% molaires du cis,cis-cyclo-octadiène-(1,5) par une mono-oléfine cyclique.

3. Procédé selon les revendications 1 et 2, caractérisé par le fait que l'on utilisé, comme oléfine cyclique présentant une paire de liaisons doubles en position 1,3, du cyclopentadiène-(1,3), du cyclohexadiène-(1,3), du cyclo-octadiène-(1,3), du cyclo-octatétraène-(1,3,5,7), du cycloheptatriène-(1,3,5) ou du cyclododécadiène-(1,3).